# EUROPEAN PATENT APPLICATION

(11) **EP 1 494 233 A1**
(43) Date of publication of application: **05.01.2005**
(21) Application number: 04015230.8
(22) Date of filing: 29.06.2004
(51) Int. Cl.: G11B 20/12, H04N 5/781, H04N 5/85, G11B 27/034, G11B 27/32

(54) **Data recording apparatus and its control method**

(30) Priority: 01.07.2003 JP 2003189393
(71) Applicant: Pioneer Corporation, Meguro-ku, Tokyo (JP)
(72) Inventor: Akama, Yusuke, Tokorozawa-City Saitama (JP); Kono, Mutsumi, Tokorozawa-City Saitama (JP)
(74) Representative: Goddar, Heinz J., Dr.

(57) **Abstract**

A data recording apparatus (FIG.1)having a main storage device (7) for recording information data stored in the main storage device onto a recording medium (15) of a removable storage device (8). The information data stored in the main storage device (7) is managed in units of the recording capacity of the recording medium (15) and is read in units of the recording capacity of the recording medium (15), from the main storage device (7), and recording of the read information data to the recording medium (15) of the removable storage device (8) is controlled.

## Description

### BACKGROUND OF THE INVENTION

### 1. Field of the Invention

The present invention relates to data recording apparatus which is capable to selectively duplicating data stored in a main storage device into a recording medium of a removable type storage device and a control method for the data recording apparatus.

### 2. Description of the Related Background Art

In a recording apparatus such as a hard disk recorder, 24 hours' worth of broadcast programs, for example, is recorded as data into an internal hard disk drive provided as a main storage device, whereupon a user can view any desired program from the programs thus recorded, selectively.

In the recording apparatus, since broadcast programs are recorded based on a ring buffer system is generally used for the internal hard disk drive, the recorded program data is erased completely when new program data is recorded. Therefore, some recording apparatuses have a removable storage device is provided in an internal or external fashion, in such a manner that program data recorded into an internal hard disk drive can be duplicated, selectively, to a recording medium, such as an optical disk, using the removable storage device in accordance with a command input by a user. Accordingly, it is possible to save any desired program data to a recording medium, and hence a desired program can be viewed, according to the user's convenience, by replaying the recording medium thus saved.

However, in the task of copying program data recorded to a hard disk drive, onto a recording medium, there is a problem in that, depending on the number of programs selected by the user, it is not possible to record the data entirely onto the recording medium, up to the end of the program.

### SUMMARY OF THE INVENTION

It is an object of the present invention to provide a data recording apparatus in which data stored into a main storage device can be recorded selectively onto a recording medium of a removable type storage device, in an efficient manner and its control method for the same.

A data recording apparatus according to the present invention having a main storage device, for recording information data stored in the main storage device, onto a recording medium of a removable storage device, the apparatus comprising: data managing means for managing the information data stored in the main storage device, in units of a recording capacity of the recording medium; and control means for reading the information data in units of the recording capacity of the recording medium, from the main storage device, and controlling recording of the read information data to the recording medium of the removable storage device.

A control method according to the present invention is a method for controlling a data recording apparatus having a main storage device, to record information data stored in the main storage device, onto a recording medium of a removable storage device, the method comprising the steps of: managing the information data stored in the main storage device, in units of a recording capacity of the recording medium; and reading the information data in units of the recording capacity of the recording medium, from the main storage device, and controlling recording of the read information data to the recording medium of the removable storage device.

### BRIEF DESCRIPTION OF THE DRAWINGS

Fig. 1 is a block diagram showing a recording apparatus to which the present invention is applied;
Fig. 2 is a diagram showing the structure of a recording area of an HDD device;
Fig. 3 is a diagram showing the structure of a recording area of an optical disk;
Fig. 4 is a flowchart showing a virtual disk setting operation;
Fig. 5 is a diagram showing a virtual disk setting input screen;
Fig. 6 is a flowchart showing a recording operation;
Fig. 7 is a diagram showing a recording area selection screen;
Fig. 8 is a flowchart showing a virtual disk recording operation;
Fig. 9 is a flowchart showing a copy operation;
Fig. 10 is a diagram showing the state of a recording area of an optical disk to which data has been copied by a copying operation;
Fig. 11 is a diagram showing the state of a virtual disk area from which data has been erased by an erasing operation;
Fig. 12 is a diagram showing the structure of a recording area of an HDD drive in a further embodiment of the present invention;
Fig. 13 is a flowchart showing a virtual disk setting operation in a further embodiment of the present invention; and
Fig. 14 is a flowchart showing a copying operation in a further embodiment of the present invention.

### DETAILED DESCRIPTION OF THE INVENTION

Below, an embodiment of the present invention is described in detail, with reference to the drawings.

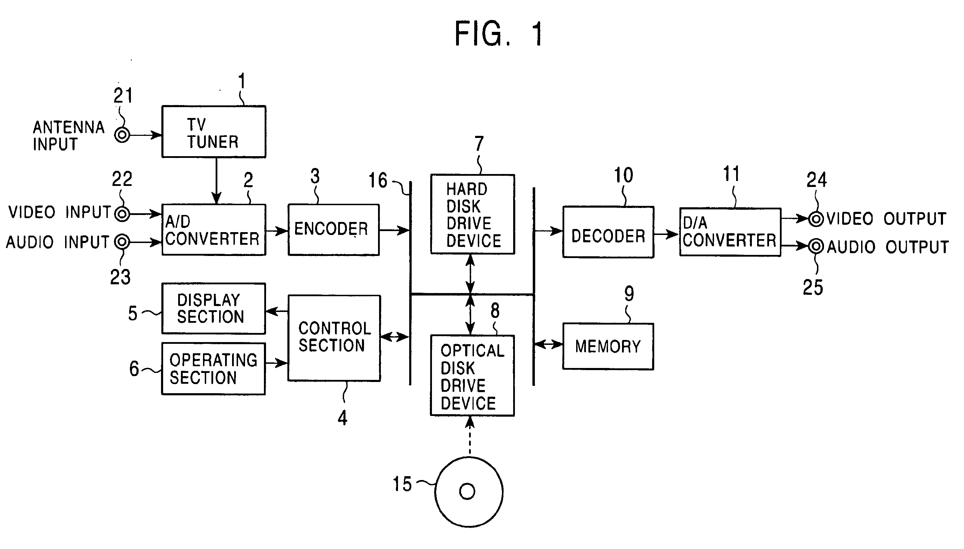

Fig. 1 shows a recording apparatus to which the present invention is applied. The recording apparatus comprises a television tuner 1, an A/D converter 2, an encoder 3, a control section 4, a display section 5, an operating section 6, an HDD (hard disk drive) device 7, an optical disk drive device 8, a memory 9, a decoder 10 and a D/A converter 11.

The TV tuner 1 is connected to an antenna input terminal 21, a television broadcast wave is received via an antenna (not illustrated) connected to the terminal 21 by selecting a channel, in accordance with control implemented by the control section 4 to obtain a reception signal. The reception signal is demodulated, and corresponding an analog video signal and audio signals are output. The output of the TV tuner 1 is connected to the A/D converter 2. The A/D converter 2 digitizes the analog video signal and audio signals output by the TV tuner 1. Furthermore, the A/D converter 2 is connected to external video and audio input terminals 22 and 23, and it digitizes an analog video signal and audio signals supplied to the terminals 22 and 23. The output of the A/D converter 2 is connected to the encoder 3. The encoder 3 converts the digitized video signal and audio signal into compressed data based on the MPEG format, for example.

The encoder 3, control section 4, HDD device 7, optical disk drive device 8, memory 9 and decoder 10 are connected to a common bus 16. The encoder 3 is able to supply the compressed data, via the bus 16, to any one of the control section 4, HDD device 7, optical disk drive device 8, memory 9 and decoder 10.

The control section 4 is constituted by a microcomputer, for example, and it controls the whole of the recording apparatus, in accordance with a previously set program. The control section 4 and the TV tuner 1 are mutually connected via a control line (not illustrated), in such a manner that the channel received by the TV tuner 1 is controlled by the control section 4.

The display section 5 and the operating section 6 are connected to the control section 4. The display section 5 displays the reception channel of the TV tuner 1, and an operating status such as a recording status and a playback status of the HDD device 7, or the optical disk drive device 8, and the like, in accordance with a display instruction from the control section 4. The operating section 6 receives an input operation from the user, and supplies an instruction corresponding to the input operation, to the control section 4.

The HDD device 7 is a main storage device based on a rewriteable hard disk (not illustrated), and it writes compressed data supplied by the encoder 3, in accordance with a write instruction from the control section 4, to an address position on the internal hard disk as indicated by the write instruction. The compressed data from the start to the end of the writing operation is taken as a separate data unit, and this forms a compressed data file. Furthermore, in accordance with a read instruction from the control section 4, the compressed data at the storage position whose address is indicated by the read instruction is read from the hard disk, and output to the bus 16.

The optical disk drive device 8 is a removable storage device, which is able to write compressed data from the encoder 3 or the HDD device 7, to an optical disk 15, in accordance with a write instruction from the control section 4. The optical disk 15 may be, for example, a DVD-R, DVD-RW, or the like. The optical disk drive device 8 is also able to read compressed data written to the optical disk 15, in accordance with a read instruction from the control section 4.

The decoder 10 decompresses the compressed data supplied from the encoder 3, HDD device 7 or optical disk drive device 8, via the bus 16, and restores the digital video signal and audio signal. The digital video signal and audio signal thus restored are supplied to the D/A converter 11. The D/A converter 11 converts the digital video signal and audio signal into an analogue video signal and audio signal, and supplies same to the video and audio output terminals 24 and 25. The video and audio output terminals 24 and 25 are connected to a video monitor and a VCR (video cassette recorder) (not illustrated).

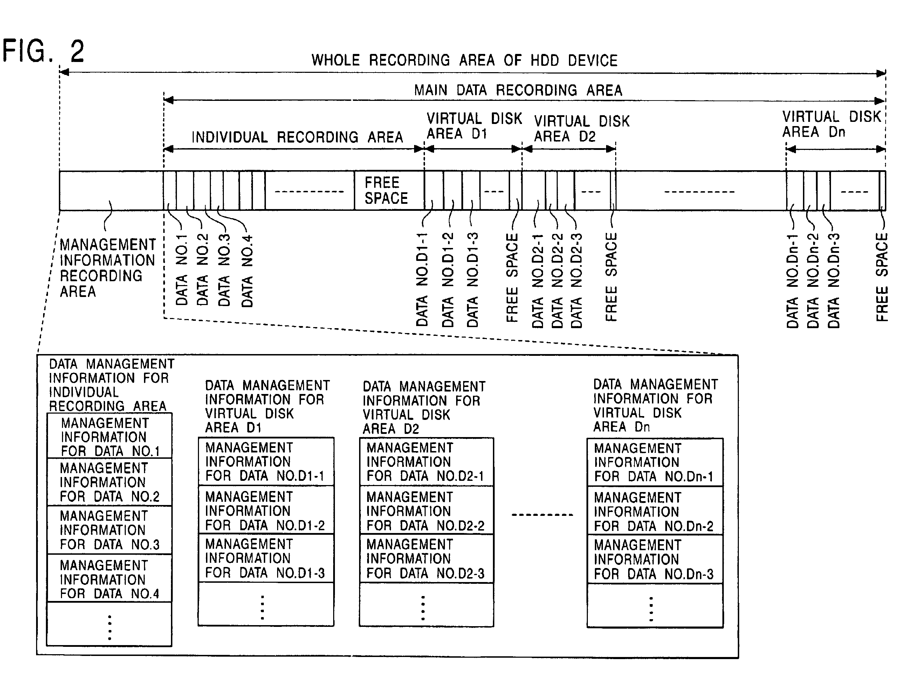

A recording area of the structure shown in Fig. 2 is formed on the hard disk of the HDD device 7. The recording area is divided into a management information recording area and a main data recording area. The aforementioned compressed data is written to the main data recording area in file units. The writing of the compressed data is carried out in the order of the addresses in the main data recording area. The main data recording area is further divided into individual recording areas and a plurality of virtual disk areas D1 - Dn. Here, n is an integer of 2 or more, but it is also possible to have one virtual disk area. The independent recording areas are areas to which compressed data is written during a recording operation.

Each of the plurality of virtual disk areas D1 - Dn, is a group recording area forming a virtual disk, this being an area formed by a virtual disk setting operation. In the virtual disk setting operation, as described hereinafter, it is possible to create a plurality of virtual disk areas D1 - Dn having a storage capacity equal to the recording capacity of the recording area (main data recording area) of the optical disk 15. The operation of writing the compressed data to the virtual disk areas D1 - Dn is carried out in the form of a virtual disk recording operation, before a copying operation. The management information recording area is an area for managing the position, size and data identification information of the file unit of compressed data written to the main data recording area, as data management information, and, as illustrated in Fig. 2, it is divided into information for the independent recording area and information for the virtual disk areas D1 - Dn. The data identification information is, for example, the file name. Fig. 2 shows a situation wherein the virtual disk areas D1 - Dn in the group recording area, and portions of the management information recording area corresponding to these virtual disk areas D1 - Dn have already been created.

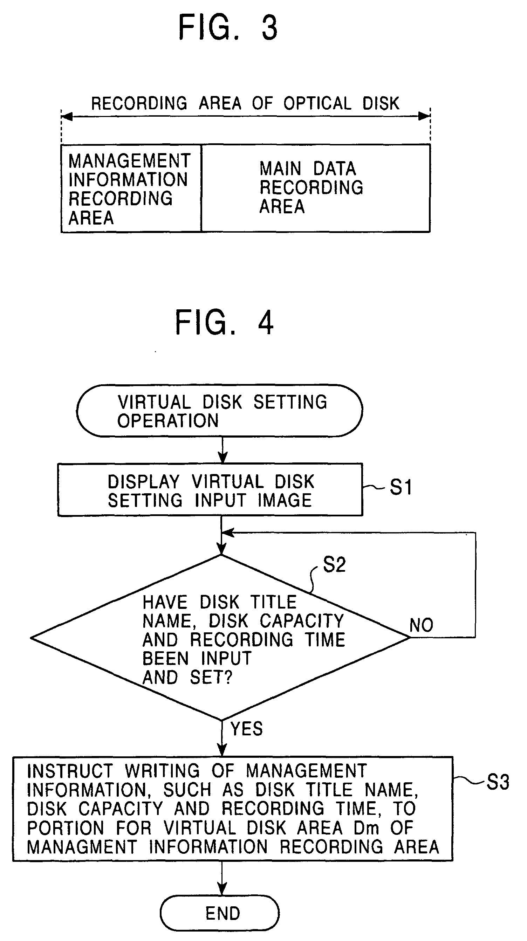

As shown in Fig. 3, the recording area of the optical disk 15 is divided into a management information recording area and a main data recording area. In the case of an optical disk 15, the management information recording area is an area for recording the position, size and data identification information of the file unit of compressed data written to the main data recording area, as data management information. In optical disks used as the optical disk 15, there are disks of different recording capacities, such as 4.7 GB disks and 1.4 GB disks, for example.

In the recording apparatus having the aforementioned configuration, in addition to the copying operation described above, the operating modes also include a virtual disk setting operation, a recording operation and a playback operation. The recording operation includes normal recording operations for recording onto individual recording areas, and virtual disk recording operations as described above. These operations can be selected by means of the user operating the operating section 6, by referring to a menu displayed on the display section 5.

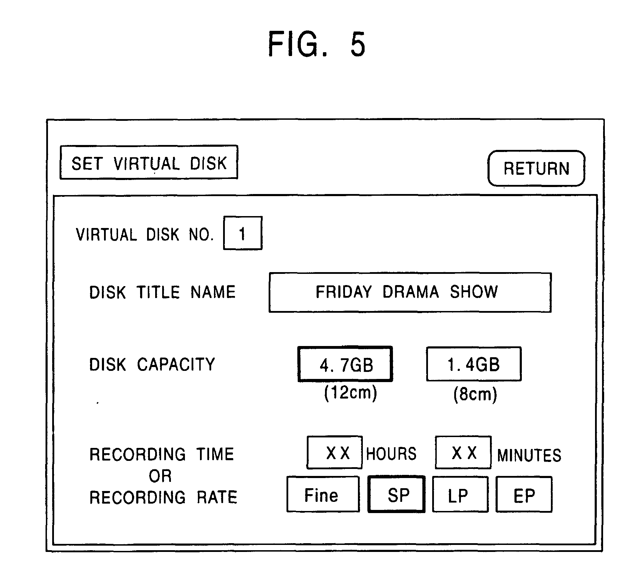

The virtual disk setting operation is an operation for setting one virtual disk area in a group recording area on a hard disk of the HDD device 7. As shown in Fig. 4, in the virtual disk setting operation, firstly, the control section 4 causes a virtual disk setting input image to be displayed on the display section 5 (step S1). The virtual disk setting input image, as shown in Fig. 5, for example, is displayed on the display section 5, and in accordance with this display, the user is able to perform operations for inputting a disk title name, a disk capacity and a recording time (or recording rate), via the operating section 6. It is possible for the user to input text characters and numerical figures directly, via the operating section, for the disk title name and recording time, and it is also possible to specify these items in accordance with program information in an EPG (electronic program guide). The disk capacity is selected as either 4.7 GB and 1.4 GB, by means of the cursor (marked by bold lines). The recording rate can be selected from the modes: Fine, SP, LP, EP; by means of a cursor. The Fine, SP, LP, EP modes are listed in order, from the mode having the shortest recording time, and the picture quality is better, the shorter the recording time becomes. The recording rate is selected by designating the compression rate used to generate compression data by the encoder 3. The virtual disk number is m, and in the example in Fig. 5, this number is 1. It is also possible to display the virtual disk number by determining the unspecified virtual disks in number order, and it is also possible to allow the number of the desired virtual disk to be input, via the operating section 6. The disk capacity, the recording time and the recording rate are connected by the relationship: disk capacity = recording time × recording rate.

After executing step S1, the control section 4 determines whether or not the disk title name, disk capacity and recording time (or recording rate) have been set by operational inputs via the operating section 6 (step S2). As illustrated in Fig. 5, when the disk title name, disk capacity and recording rate have been set, an instruction is then issued for writing the disk title name, disk capacity and recording time to the HDD device 7, to a portion of the management information recording area for the virtual disk Dm (step S3).

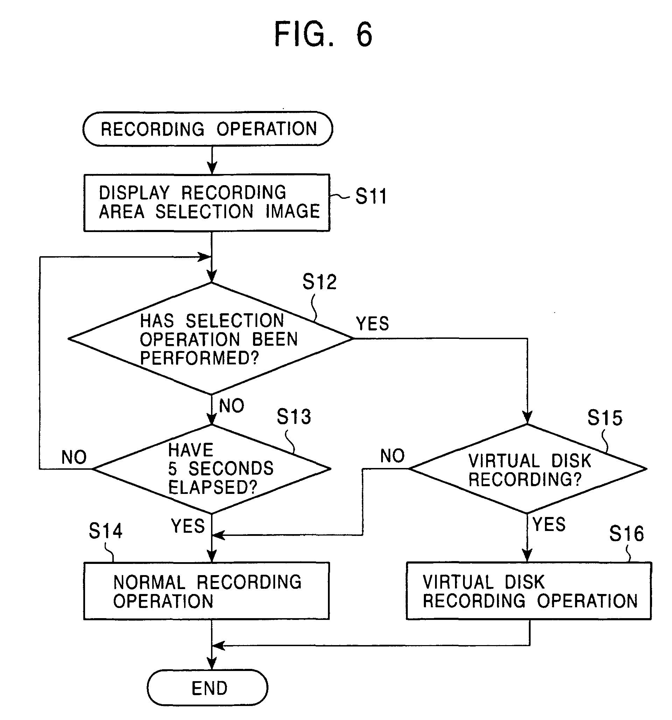

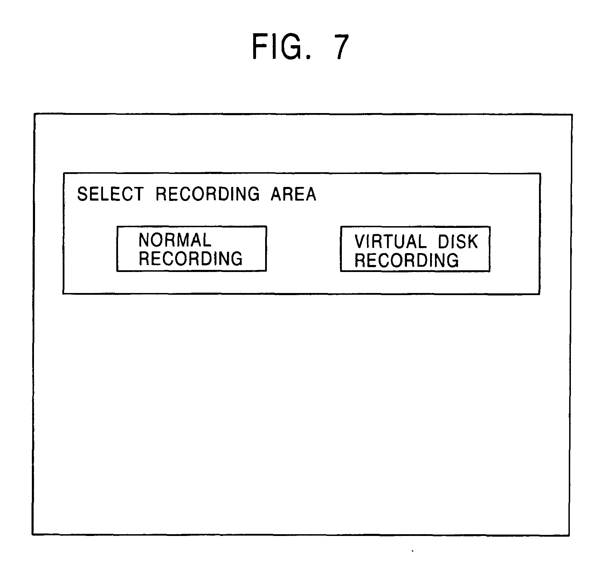

The recording operation is an operation for writing compression data to the HDD device 7. When a recording key or a programmed recording key (neither illustrated) of the operating section 6 is operated, the control section 4 starts control of the recording operation, and as shown in Fig. 6, firstly, a recording area selection image is displayed on the display section 5 (step S11). The recording area selection image, as shown in Fig. 7, for example, is displayed on the display section 5, and on the basis of this display, the user is able to select either normal recording or virtual disk recording, by means of the operating section 6. After executing step S11, the control section 4 determines whether or not there has been a selection operation (step S12). If there has been no selection operation, then it is determined whether or not this state has continued for five seconds or more after execution of step S11 (step S13). If five seconds or more has not yet elapsed, then the procedure returns to the judgment operation in step S12. If, on the other hand, five seconds has elapsed, then the procedure advances to a normal recording operation (step S14).

If it is determined that a selection operation has been made at step S12, then it is subsequently judged whether or not this selection indicates the virtual disk recording (step S15). If the virtual disk recording has been selected, then the procedure advances to a virtual disk recording operation (step S16), and if the virtual disk recording has not been selected, then it advances to the normal recording operation in step S14.

In the normal recording operation, a video signal and audio signals in a broadcast wave received by the TV tuner 1, or a video signal and audio signals supplied to the external video and audio input terminals 22 and 23 are converted into a digital video signal and audio signal, by means of the A/D converter 2. The digital video signal and audio signal are compressed by the encoder 3 to obtain compressed data, and this compressed data is supplied via the bus 16 to the HDD device 7. In accordance with a write instruction from the control section 4, the HDD device 7 writes the compressed data to an address position in the individual recording area of the hard disk as indicated by the write instruction.

When the writing to the individual recording area has completed, the data management information relating to the compressed data thus written (data identification information, recording position and file size), is written to the management information recording area of the hard disk.

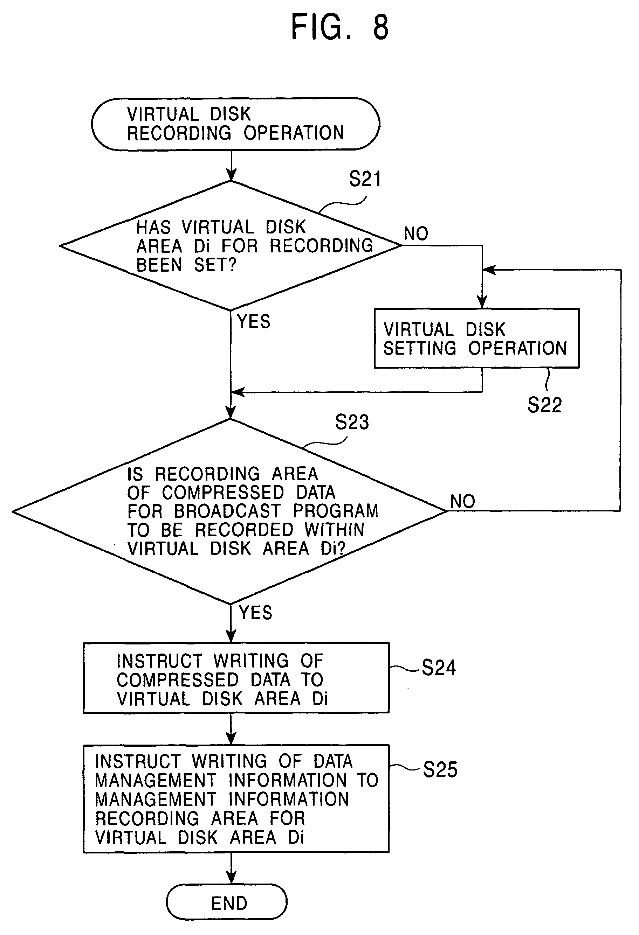

In the virtual disk recording operation, as shown in Fig. 8, it is judged whether or not the virtual disk area Di that is to be recorded to has been set (step S21). Numeral i is any number from 1 to n. If the virtual disk area Di is not set, then the virtual disk setting operation is executed (step S22). When the virtual disk area Di has been set, or when the step S22 has been executed, it is judged whether or not there is remaining recording space sufficient to allow writing of the compressed data for a broadcast program to be recorded, in the virtual disk area Di thus set (step S23). The program to be recorded is a program currently designated or a program set by a timer program, and it corresponds to the disk title name designated by the virtual disk setting operation. In the case of timer programmed recording, the programming operation is carried out separately. Therefore, the broadcast time (length of time) of the broadcast program that is to be recorded can be identified from the program information in the EPG, and hence it can be judged whether or not the compressed data for that broadcast program is of a size that can be written to the virtual disk area Di that has been set.

If, as a result of the judgment at step S23, it is not possible to write the data to the virtual disk area Di, then the procedure advances to step S22, in order to carry out a new virtual disk setting operation. If the data can be written to the virtual disk area Di, then an instruction is issued, to the HDD device 7, to write the compressed data to the virtual disk area Di (step S24). In the case of timer programmed recording, the operation of writing to the virtual disk area Di starts at the programmed time.

The case of a writing operation to the virtual disk area Di is the same as the normal recording operation up to the step where the compressed data of the video signal and audio signal in the received broadcast waves is supplied to the HDD device 7, via the bus 16. In accordance with a write instruction from the control section 4, the HDD device 7 writes the compressed data to the virtual disk area Di set by the virtual disk setting operation described above, within the group recording area of the hard disk.

When the writing of compressed data to the virtual disk area Di has been completed, an instruction is issued to write data management information to a portion of the management information recording area corresponding to the virtual disk area Di (step S25). In the HDD device 7, in response to the write command at step S25, data management information (data identification information, recording position, file size) is written to the portion of the management information recording area corresponding to the virtual disk area Di.

Therefore, by executing the virtual disk recording operation, virtual disk areas D1, D2, ... are formed in the group recording area, as illustrated in Fig. 2, and compressed data for each broadcast program (for example, No. D1-1, No. D1-2, No. D1-3, ...) is written to a virtual disk area, as a single file, each time step S24 is executed. Furthermore, portions for the virtual disk areas D1, D2, ... are formed in the management information recording area.

The playback operation is an operation in which the compressed data written to the HDD device 7 is restored into an analog video signal and audio signals, by means of the decoder 10 and the D/A converter 11. In the playback operation, in accordance with a read instruction from the control section 4, compressed data is read from the address position on the hard disk of the HDD device 7 indicated by the read instruction. The compressed data thus read is supplied via the bus 16 to the decoder 10 which compresses it. The compressed data is converted into a digital video signal and audio signal by the decoder 10. Furthermore, the digital video signal and audio signal are converted into an analog video signal and audio signals, by means of the D/A converter 11, and these analog signals are output from the video and audio output terminals 24 and 25.

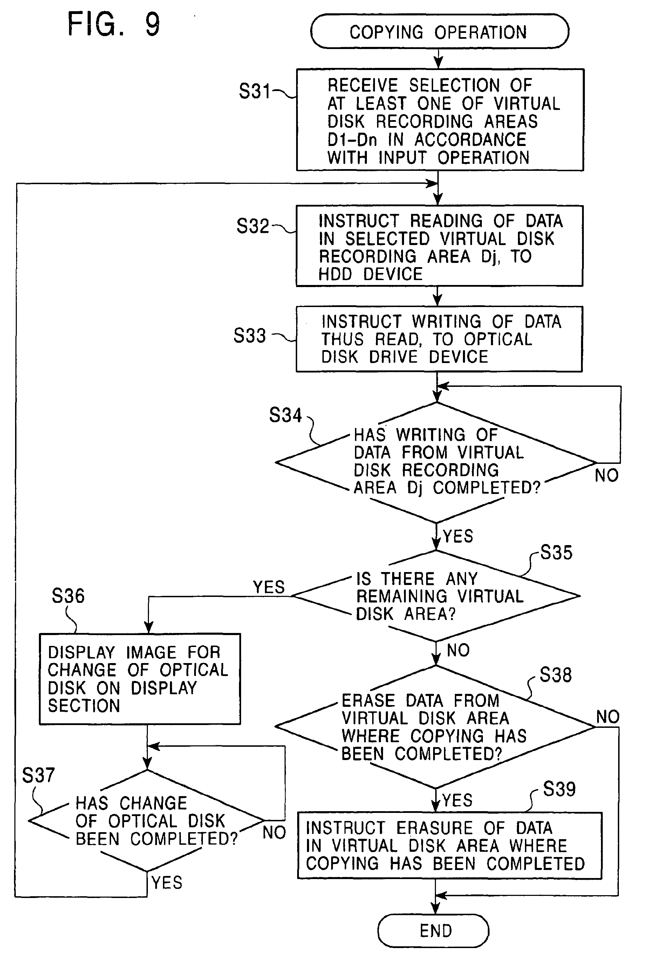

In the copying operation, as shown in Fig. 9, the control section 4 first receives, via the operating section 6, a selection of at least one of D1 - Di among the virtual disk areas D1 - Dn of the hard disk of the HDD device 7, to which data has already been written (step S31). Here, it is supposed that data is written to the virtual disk areas D1 - Di, by means of the virtual disk recording operation. In step S31, for example, the control section 4 displays, on the display section 5, data identification information such as a file name and a broadcast program name is displayed. The data identification information relates to the compressed data recorded in the virtual disk areas D1 - Di of the hard disk of the HDD device 7. The data identification information is displayed as a group for each virtual disk area, and the user selects, from the contents thus displayed, at least one virtual disk area which is to be copied to the optical disk 15, by operating the operating section 6.

The control section 4 instructs to read data from one selected virtual disk area, to the HDD device 7, via the bus 16 (step S32), and furthermore, it also instructs to write the read data to the optical disk drive device 8 (step S33). If the one virtual disk area is taken to be Dj (where j is a value between 1 and i), then in accordance with the read instruction in step S32, in the HDD device 7, compressed data is read from the virtual disk area Dj of the hard disk specified by the read instruction. In the case of this read operation, a portion of the management information recording area corresponding to the specified virtual disk area Dj is used. The compressed data thus read is supplied via the bus 16 to the optical disk drive device 8. The optical disk drive device 8 writes the compressed data supplied by the HDD device 7, in accordance with a write instruction from the control section 4, to the main data recording area of the optical disk 15. When writing of all of the compressed data in the virtual disk area Dj to the main data recording area of the optical disk 15 has been completed, the writing of the data of the one virtual disk area Dj to the optical disk 15 is completed, by writing the data management information to the management information recording area of the optical disk 15. The data management information written to the management information recording area of the optical disk 15 is different to that in the management information recording area of the HDD device 7 corresponding to the virtual disk area Dj, for example, it contains information on the storage position that is compatible with the optical disk 15.

When writing data at step S33, if no optical disk 15 has been inserted correctly in the device, an image may be displayed on the display section 5 which prompts the user to reinsert the optical disk 15, or to insert another optical disk 15.

After the instruction in step S33, the control section 4 judges whether or not the writing of the data in the one virtual disk area Dj, to the optical disk 15, has completed (step S34). If the write operation has completed, for example, the control section 4 is able to judge the termination of the writing operation to the optical disk 15, by means of a signal indicating the completion of writing supplied from the optical disk drive device 8 to the control section 4. If the writing to the optical disk 15 has completed, it is judged whether or not there is a remaining virtual disk area for which writing to the optical disk 15 has not been completed, of the virtual disk areas selected at step S31 (step S35). If there is a remaining virtual disk area, then an image is displayed on the display section 5 prompting the user to change the optical disk 15 (step S36). In other words, since the optical disk 15 inserted into the optical disk drive device 8 is a disk for which writing has been completed, the user is requested to insert a blank, unrecorded optical disk 15. It is then judged whether or not changing of the optical disk 15 has been completed (step S37), and if it is confirmed that the optical disk 15 has been changed, then the procedure returns to step S32, the HDD device 7 is instructed to read data from the next virtual disk area selected, and writing of the data thus read to the optical disk drive device 8 is also instructed (step S33), following a similar operation to that described above.

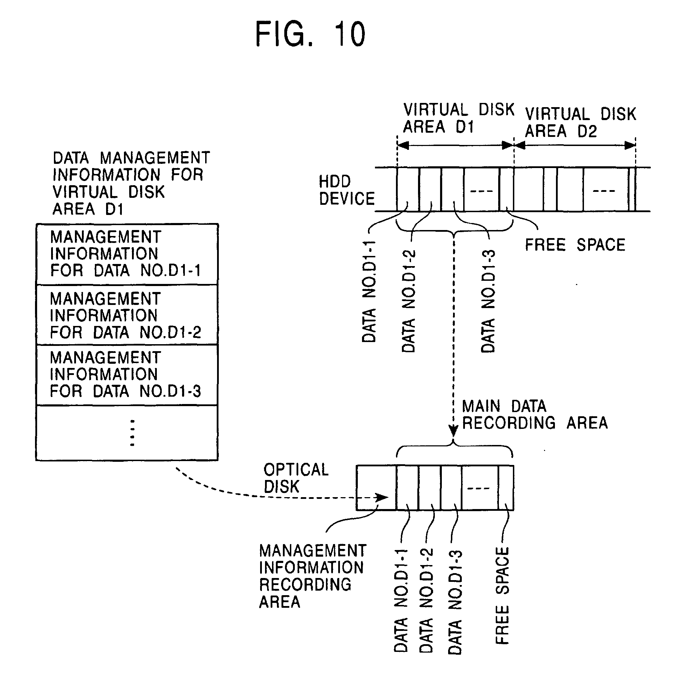

If the data in the virtual disk area D1 of the hard disk illustrated in Fig. 2 is written to the optical disk 15 by means of the copying operation, then the same data and its management information is created as illustrated in Fig. 10, for example, in the recording area of the optical disk 15.

In the case that an auto-changer device is provided for automatically changing the optical disks 15, when the control section 4 judges at step S35 that there is a remaining virtual disk area, it instructs the auto-changer device to change the optical disk 15, and then immediately proceeds to step S37.

If the control section 4 has judged at step S35 that there is no remaining virtual disk area, then it judges whether or not the data in the virtual disk area to be copied is to be erased (step S38). If an operation for erasing data is implemented, by the user, by means of the operating section 6, then the HDD device 7 is instructed, via the bus 16, to erase the data in the virtual disk area that has been copied (step S39). This data erasure operation refers to the portion of the management information recording area corresponding to the virtual disk area whose data has been copied. After erasing all of the data in the virtual disk area that has been copied, the HDD device 7 also erases the information portion of the management information recording area corresponding to the virtual disk area. When step S39 has been executed, the copy operation terminates.

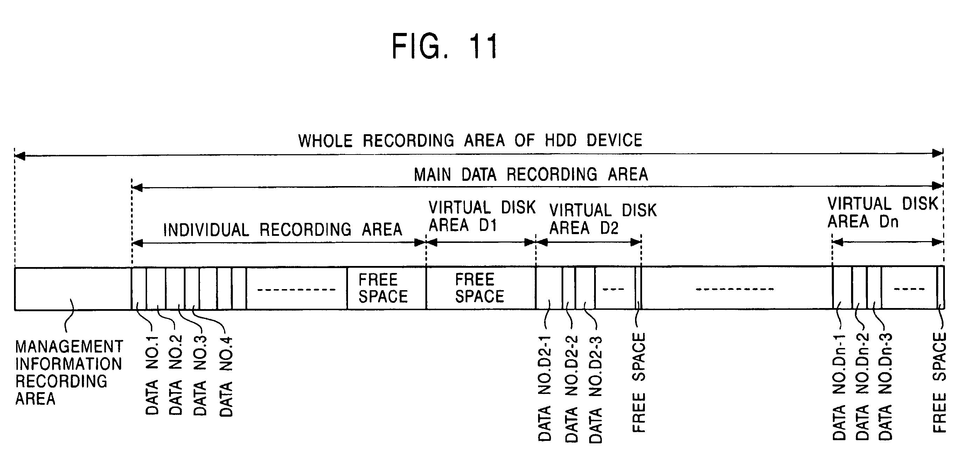

If data in the virtual disk area D1 of the HDD device 7 illustrated in Fig. 2 has been erased as a result of the data erasure operation, then the contents of that virtual disk area D1 will become a free space, as illustrated in Fig. 11.

In the data erasure operation, it is possible to erase any area of the virtual disk areas D1 - Dn of the hard disk of the HDD device 7, selectively.

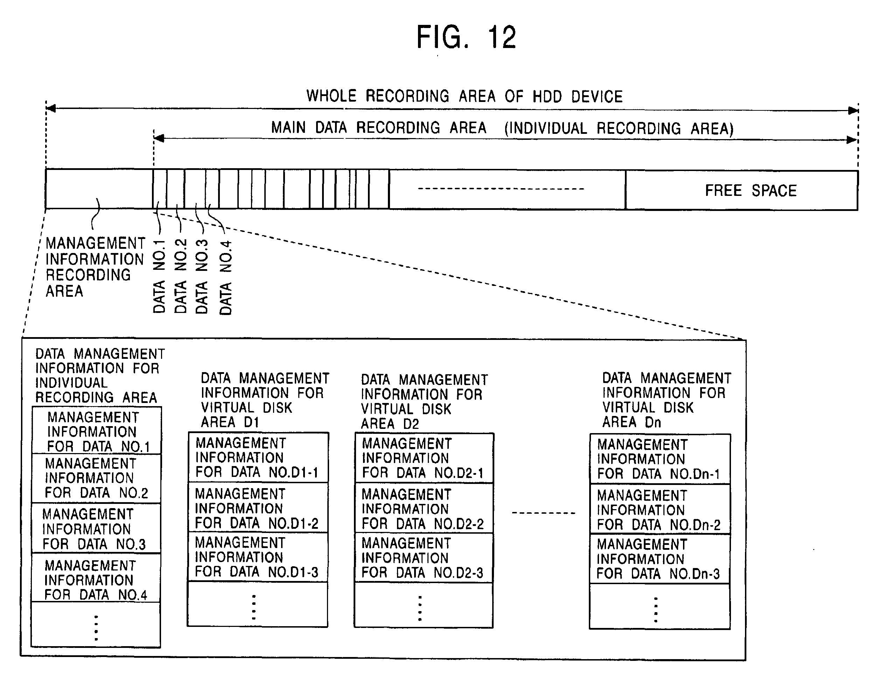

In the embodiment described above, a plurality of virtual disk areas D1 - Dn is actually provided in the main data recording area of the hard disk of the HDD device 7, but as shown in Fig. 12, it is also possible for the main data recording area to be a desired recording only. In this case, the virtual disk areas D1 - Dn are not actually created in the HDD device 7, but it is supposed that there are virtual disk areas D1 - Dn, and portions for the individual recording area and the virtual disk areas D1 - Dn are provided in the management information recording area, as illustrated in Fig. 12.

Next, the virtual disk recording operation and the copying operation in a case where a plurality of virtual disk areas D1 - Dn are not provided in the main data recording area of the hard disk of the HDD device 7, will be described.

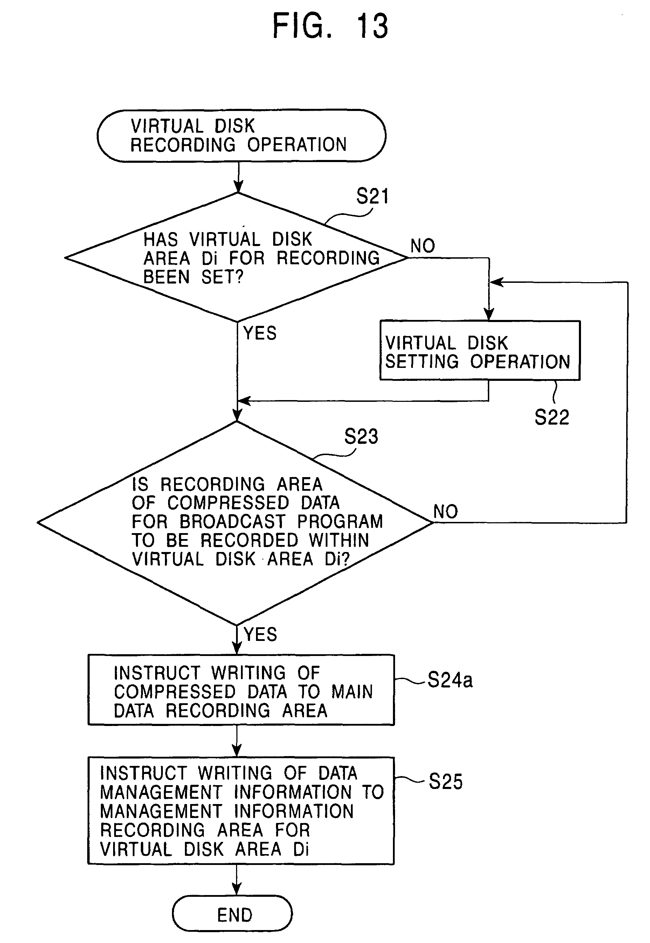

As illustrated in Fig. 13, in the virtual disk recording operation, the control section 4 executes steps S21 to S23. In the virtual disk recording operation illustrated in Fig. 8, instead of step S24, the control section 4 instructs the HDD device 7 to write compressed data to the main data recording area (step S24a), and in step S25, data management information is written to the portion of the management information recording area corresponding to the virtual disk area Di. The storage position contained in this data management information is an individual storage position in the main data recording area. Apart from this, the operation is the same as the virtual disk recording operation in Fig. 8, and therefore description thereof is omitted here.

The data management information for the virtual disk area Di may be written to another storage device, such as an internal memory of the control section 4, or the memory 9, or the like, rather than being written to the management information recording area of the hard disk of the HDD device 7.

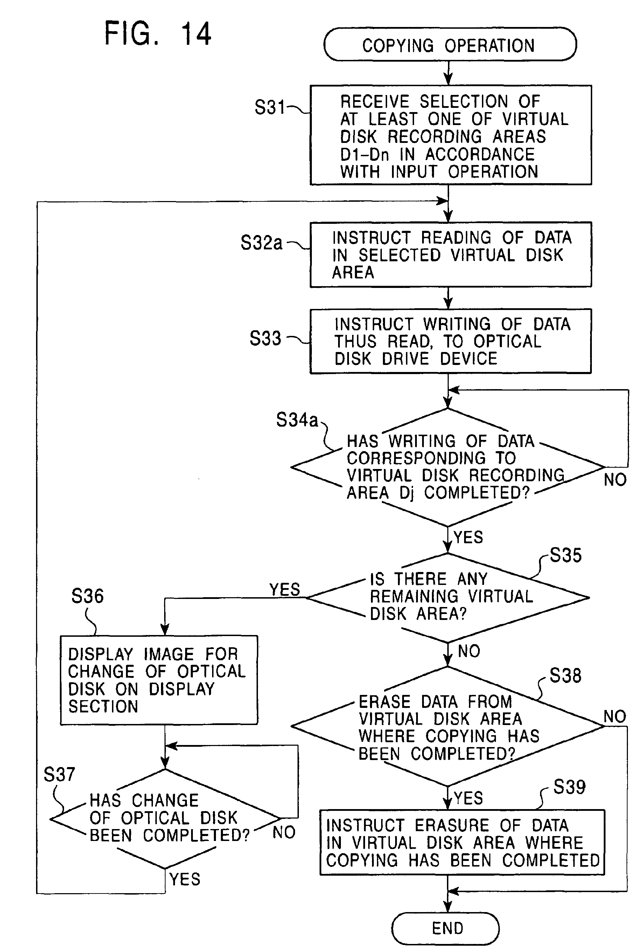

In the copying operation, as shown in Fig. 14, after executing step S31, the control section 4 instructs the HDD device 7, via the bus 16, to read data corresponding to one selected virtual disk area (step S32a), and furthermore, it instructs to write the read data to the optical disk drive device 8 (step S33). Thereupon, it is judged whether or not the data reading corresponding to the one virtual disk area has been completed (step S34a). By means of executing step S32a, the compressed data corresponding to the virtual disk area Dj is read from the main data recording area. The portion of the management information recording area corresponding to the designated virtual disk area Dj is used in this reading operation, and compressed data relating to the virtual disk area Dj is read from the main data recording area, in accordance with the recording position contained in the data management information for the virtual disk area Dj. The compressed data thus read is supplied to the optical disk drive device 8, via the bus 16. In accordance with the write instruction from the control section 4, the optical disk drive device 8 writes the compressed data supplied by the HDD device 7 to the main data recording area of the optical disk 15. When the writing of all of the compressed data relating to the virtual disk area Dj, to the optical disk 15, has been completed, the data management information is written to the management information recording area of the optical disk 15, thereby completing the writing of the data of the one virtual disk area Dj to the optical disk 15.

In the respective embodiments described above, the compressed data obtained by compressing digital video and audio signals is written to an optical disk, as information data, but it is not limited to being compressed data. It is also possible to write uncompressed digital video and audio signals. Furthermore, the information indicated by the data written to the optical disk is not limited to a video signal and/or audio signal. For example, it may also be data indicating other information such as a computer program.

Moreover, in the respective embodiments described above, an optical disk drive device is used as a removable type storage device, but it is also possible to use a magnetic disk, semiconductor memory, or the like, instead of an optical disk, as a recording medium.

Furthermore, since the same recording media do not necessarily have the same recording capacity, it is also possible to change the size of the virtual disk areas, in accordance with the capacity of the recording medium inserted into the removable storage device.

Moreover, in the aforementioned embodiment, an optical disk drive device was incorporated internally into a recording apparatus, as a removable type storage device, but it is also possible to use a device which is attached externally to the recording apparatus.

As described above, according to the present invention, it is possible to record data accumulated in an accumulating device, selectively, onto a recording medium of a removable type storage device, with good efficiency. Moreover, the present invention may also be applied to a recording apparatus, such as a hard disk recorder.

The features disclosed in the foregoing description, in the claims and/or in the accompanying drawings may, both separately and in any combination thereof, be material for realising the invention in diverse forms thereof.

## Claims

1. A data recording apparatus having a main storage device, for recording information data stored in said main storage device, onto a recording medium of a removable storage device, comprising:
data managing means for managing the information data stored in said main storage device, in units of a recording capacity of said recording medium; and
control means for reading the information data in units of the recording capacity of said recording medium, from said main storage device, and controlling recording of the read information data to the recording medium of said removable storage device.

2. The data recording apparatus according to claim 1, wherein
said data managing means forms at least one group recording area having the recording capacity of said recording medium, in said main storage device, and writes said information data into said group recording area when said information data is written to said main storage device;
said control means reads all of the information data in said group recording area; and
said removable storage device writes all of the information data in said group recording area read by said control means, onto the recording medium of said removable storage device.

3. The data recording apparatus according to claim 2, wherein said main storage device includes a main data recording area and a management information recording area in the recording area, the main data recording area consisting of an individual recording area for storing said information data individually, and said group recording area, and a management information recording area consisting of an individual management area for storing management information relating to information data stored in said individual recording area, and a group management area for storing management information relating to information data stored in said group recording area.

4. The data recording apparatus according to claim 2, further comprises erasing means for erasing all of the information data stored in said group recording area of said main storage device.

5. The data recording apparatus according to claim 1, wherein
said data managing means stores, in said main storage means, group management information for managing information data stored in said main storage device, in units of the recording capacity of said recording medium;
said control means reads said information data from said main storage device, in units of the recording capacity of said recording medium, on the basis of said management information; and
said removable storage device writes said information data in units of the recording capacity of said recording medium thus read by said control means, to the recording medium of said removable storage device.

6. The data recording apparatus according to claim 5, wherein said main storage device includes, in the recording area, a main data recording area for storing said information data individually; and a management information recording area consisting of a group management area for storing said group management information, and an individual management area for storing management information relating to information data not subjected to management in units of the recording capacity of said recording medium.

7. The data recording apparatus according to claim 1, wherein said main storage device is a hard disk drive device, and said removable storage device is an optical disk drive device.

8. The data recording apparatus according to claim 1, wherein the information data is compressed data obtained by demodulating a reception signal for a broadcast program and then compressing the demodulated signal.

9. A method for controlling a data recording apparatus having a main storage device, to record information data stored in said main storage device, onto a recording medium of a removable storage device, the method comprising the steps of:
managing the information data stored in said main storage device, in units of a recording capacity of said recording medium; and
reading the information data in units of the recording capacity of said recording medium, from said main storage device, and controlling recording of the read information data to the recording medium of said removable storage device.
